# EUROPÄISCHE PATENTSCHRIFT

(11) **EP 2 310 244 B1**
(45) Veröffentlichungstag und Bekanntmachung des Hinweises auf die Patenterteilung: **05.09.2012**
(21) Anmeldenummer: 09777324.6
(22) Anmeldetag: 21.07.2009
(51) Int. Cl.: B62D 1/185

(54) **AUSSENROHR EINER LENKWELLE IN EINEM KRAFTFAHRZEUG**
OUTER TUBE OF A STEERING SHAFT IN A MOTOR VEHICLE
TUBE EXTÉRIEUR D'UN ARBRE DE DIRECTION DANS UN VÉHICULE AUTOMOBILE

(30) Priorität: 11.08.2008 DE 102008041155
(43) Veröffentlichungstag der Anmeldung: 20.04.2011
(73) Patentinhaber: ZF-Lenksysteme GmbH, 73527 Schwäbisch Gmünd (DE)
(72) Erfinder: HEINTSCHEL, Manfred, 73525 Schwäbisch Gmünd (DE); KUBISCH, Sebastian, 73568 Durlangen (DE)
(86) Internationale Anmeldenummer: PCT/EP2009/005275
(87) Internationale Veröffentlichungsnummer: WO 2010/017878

(56) Entgegenhaltungen:
- EP-A- 1 375 943
- EP-A- 1 790 868
- DE-A1- 10 359 962
- DE-T5- 10 297 302

## Beschreibung

Die Erfindung bezieht sich auf ein Außenrohr einer Lenkwelle in einem Kraftfahrzeug nach dem Oberbegriff des Anspruches 1.

Die W02009138070 beansprucht eine Priorität aus der DE200810023655 vom 15.05.2008 und offenbart ein Außenrohr einer Welle in einem Kraftfahrzeug, mit einer in dem Außenrohr zu führenden Innenwelle, wobei die Innenwelte und das Außenrohr zueinander teleskopartig verschiebbar und in Drehrichtung durch an der Innenseite des Außenrohrs und an der Außenseite der Innenwelle wahlweise drei bis zwölf radial ineinander greifende Kugellaufbahnen bzw. Erhebungen formschlüssig koppelbar sind, wobei das Außenrohr eine sich in Umfangrichtung ändernde Wandstärke aufweist, das Außenrohr eine den Außenmantel begrenzende, kreisförmige Einhüllende aufweist, am Außenmantel radial zurückgesetzte Außenwandreduktionsabschnitte mit reduziertem Außenradius vorgesehen sind, die sich in Umfangsrichtung an teilkreisförmige Kugellaufbahnen anschließen, welche an der Innenseite des Außenrohrs vorgesehen sind, an der Innenseite des Außenrohrs korrespondierend zur den radial zurückgesetzten Außenwandreduktionsabschnitten, die sich auf der Außenseite befinden, ebenfalls radial zurückgesetzte Innenwandkompensationsabschnitte ausgebildet sind, und wobei die Innenwandkompensationsabschnitte auf einem Kreis mit einem ersten Radius liegen, die Innenwandbereiche neben den Kugellaufbahnen und den Innenwandkompensationsabschnitten auf einem Kreis mit einem zweiten Radius liegen, der jeweils tiefste Punkt der Kugellaufbahnen auf einem Kreis mit einem dritten Radius liegt, die Außenwandreduktionsabschnitte auf einem Kreis mit dem einem vierten Radius liegen, die kreisförmige Einhüllende des Außenmantels einen fünften Radius hat, und die Standard-Wandstärke des Außenrohres im Bereich zwischen zwei Innenwandkompensationsabschnitten aus der Differenz von fünftem und zweitem Radius bestimmbar ist sowie die maximale Wandstärke des Außenrohres aus der Differenz von viertem und erstem Radius bestimmbar ist.

In der DE 10 2005 028 054 B3 wird eine teleskopartig verschiebbare Lenkwelle beschrieben, die aus einem Lenksäulenteleskopinnenteil und einem Lenksäulenteleskopaußenteil besteht, wobei Innenteil und Außenteil zusammenzuschieben sind. Das Außenteil bildet hierbei ein Außenrohr, das Innenteil eine im Außenrohr axial verschieblich geführte Innenwelle. Um die Übertragung eines Lenkmomentes zu ermöglichen, sind Außenrohr und Innenwelle in Umfangsrichtung üblicherweise formschlüssig gekoppelt, was beispielsweise durch ineinandergreifende Kugellaufbahnen bzw. Erhebungen an der Innenseite des Außenrohrs und der Außenseite der Innenwelle bewerkstelligt wird. Diese sich in Achsrichtung erstreckenden Kugellaufbahnen bzw. Erhebungen erlauben zugleich das teleskopartige Ineinanderschieben bzw. Auseinanderziehen von Außenrohr und Innenwelle.

Bei der Gestaltung des Außenrohres ist auf ein geringes Gewicht bei zugleich hoher Drehmomentübertragung zu achten. Außerdem soll das Außenrohr in einfacher Weise herzustellen sein.

Der Erfindung liegt die Aufgabe zu Grunde, ein in einfacher Weise herzustellendes Außenrohr einer Lenkwelle in einem Kraftfahrzeug anzugeben, das sich durch eine hohe Drehmomentübertragung bei zugleich verhältnismäßig geringem Gewicht auszeichnet.

Diese Aufgabe wird erfindungsgemäß mit den Merkmalen des Anspruches 1 gelöst. Die Unteransprüche geben zweckmäßige Weiterbildungen an.

Das erfindungsgemäße Außenrohr ist Bestandteil einer Lenkwelle in einem Kraftfahrzeug, die außerdem eine Innenwelle umfasst, welche in dem Außenrohr aufgenommen ist, wobei die Innenwelle und das Außenrohr zueinander teleskopartig verschiebbar sind. In Drehrichtung sind das Außenrohr und die Innenwelle zur Übertragung eines Lenk- bzw. Drehmomentes formschlüssig miteinander gekoppelt. Der Formschluss zwischen Außenrohr und innen liegender Innenwelle wird durch radial ineinandergreifende Kugellaufbahnen bzw. Erhebungen erreicht, die an der Außenseite der Innenwelle bzw. der Innenseite des Außenrohr ausgebildet sind. Die Kugellaufbahnen zur Aufnahme von Kugeln und die Erhebungen bewirken einen Formschluss in Umfangsrichtung, wohingegen in Achs- bzw. Längsrichtung die teleskopartige Verschiebbarkeit zwischen Außenrohr und Innenwelle durch die Formschlusselemente nicht beeinträchtigt ist. Die leichtgängige translatorische Verschiebbarkeit wird durch die Kugellagerausführung zwischen Innenwelle und Außenrohr maßgeblich unterstützt.

Erfindungsgemäß ist vorgesehen, dass das Außenrohr eine sich in Umfangsrichtung ändernde Wandstärke aufweist. Als weiteres Merkmal besitzt das Außenrohr eine den Außenmantel begrenzende, kreisförmige Einhüllende, wobei am Außenmantel segmentweise radial zurückgesetzte Außenwandreduktionsabschnitte ausgebildet sind, die einen reduzierten Außenradius - bezogen auf die kreisförmige Einhüllende - aufweisen. Diese Außenwandreduktionsabschnitte schließen sich in Umfangsrichtung gesehen an teilkreisförmige Kugellaufbahnen an der Innenseite des Außenrohrs an, die die Formschlusselemente darstellen. Die Außenwandreduktionsabschnitte korrespondieren mit an gleicher Winkelposition ausgebildeten Innenwandkompensationsabschnitten, die sich an der Innenseite des Außenrohrs befinden und analog zur den Außenwandreduktionsabschnitten ebenfalls radial zurückgesetzt sind.

Diese Ausführung weist verschiedene Vorteile auf. Es wird insbesondere eine Vergleichmäßigung der Wandstärke des Außenrohres bei zugleich hoher maximaler Drehmomentübertragung erreicht. Die Wandstärke des Außenrohres ist im mittleren Bereich zwischen zwei in Umfangsrichtung verteilt angeordneten Kugellaufbahnen an der Innenwand reduziert und in unmittelbarer Nachbarschaft zu der Kugellaufbahn verstärkt. Die reduzierte Wandstärke führt zu einer signifikanten Gewichtsreduktion des Außenrohrs, ohne die Steifigkeit und maximale Drehmomentübertragung wesentlich zu reduzieren. Unmittelbar benachbart zu den Kugellaufbahnen besitzt das Außenrohr dagegen eine erhöhte Wandstärke, wodurch eine verhältnismäßig stark ausgeprägte Kugellaufbahn für eine sichere Aufnahme der Kugeln mit guter Abstützung in Umfangrichtung erreicht wird. Um jedoch die Wandstärke an dieser Stelle zu begrenzen, ist an der Außenseite der Außenwandreduktionsabschnitt mit reduziertem Außenradius vorgesehen, wodurch der Unterschied zwischen reduzierter Wandstärke im zwischenliegenden Segment zwischen zwei Kugellaufbahnen und in unmittelbarer Nachbarschaft zu jeder Kugellaufbahn verhältnismäßig gering gehalten werden kann. Die Teilkreisform der Kugellaufbahnen erlaubt eine unter Last flächige Führung der Kugeln in den Kugellaufbahnen.

Das erfindungsgemäße Außenrohr berücksichtigt alle fertigungstechnischen Belange und stellt eine optimale Lösung bezüglich der Geometrie dar. Die nahezu runde Rohrform ermöglicht optimale Drehmomentübertragungen. Auf Grund der geringen Wandstärkenunterschiede lässt sich das Außenrohr in einem Zug herstellen, hierbei wird die erforderliche hohe Kaltverfestigung für die gewünschte Drehmomentübertragung erreicht. Zugleich bleibt genügend Kernfestigkeit nach der Wärmebehandlung erhalten, um Kugeleindrückungen unter Last zu vermeiden. An der Außenfläche weist das Außenrohr keine Rillen auf, es ist vielmehr annähernd rund und in Wellenform gestaltet, was den Vorteil bietet, dass zum Schweißen die außen liegende, wärmebehandelte Schicht ohne die Gefahr einer starken Schwächung abgedreht und das Rohr während des Herstellprozesses auch automatisch gerichtet werden kann.

Die annähernd runde Form des Außenrohrs erlaubt auch eine einfache Montage, indem das Außenrohr beispielsweise durch den Kabinenboden oder die Firewall des Fahrzeugs unter Verwendung einer runden Kabinendurchführung hindurch gesteckt wird. Zudem lässt sich das Außenrohr in der Kabinendurchführung direkt drehen.

Das Außenrohr ist bezüglich des Materialeinsatzes optimiert und weist daher trotz maximaler Drehmomentübertragung ein geringes Gewicht auf. Zur Verbesserung des Oberflächenverschleißes kann es zweckmäßig sein, das Außenrohr wärmezubehandeln, wodurch nach der hohen Kaftvertestigung eine ausreichende Kernfestigkeit zur Vermeidung von Kugeleindrückungen erhalten bleibt.

Radiusänderungen sowohl an der Außenseite als auch an der Innenseite des Außenrohres erfolgen vorzugsweise fließend, beispielsweise dadurch, dass die Änderung am Außenradius und/oder am Innenradius in Umfangsrichtung zumindest bis zur ersten Ableitung, vorzugsweise aber bis zur zweiten Ableitung stetig ist. Die fließenden Radiusübergänge tragen zur Vermeidung von Spannungsspitzen im Material des Außenrohres bei.

Vorteilhafterweise ist der Außenmantel des Außenrohres nur segmentweise radial zurückgesetzt, und zwar in Bereichen, die sich in Umfangsrichtung unmittelbar an eine Kugellaufbahn auf der Innenwand des Außenrohres anschließen. Um zu große Wandstärkenunterschiede zu vermeiden, ist vorgesehen, dass der Radius des Außenmantels im Bereich der radial zurückgesetzten Außenwandreduktionsabschnitte beispielsweise nicht mehr als 10 %, insbesondere aber nicht mehr als 5 % gegenüber der Einhüllenden reduziert ist. Die Wandstärke differiert zwischen den Außenwandreduktionsabschnitten und den Bereichen zwischen zwei Kugellaufbahnen um maximal 25 %, wobei sämtliche Werte bis 25 % möglich sind. Der Radius des Innenmantels zwischen den Innenwandkompensationsabschnitten und den mittleren Bereichen zwischen zwei Kugellaufbahnen differiert zweckmäßigerweise um nicht mehr als 20 %, insbesondere nicht mehr als 10 %, wobei auch in diesem Fall sämtliche Zwischenwerte bis zum Erreichen der Höchstgrenzen möglich sein sollen.

Weitere Vorteile und zweckmäßige Ausführungen sind den weiteren Ansprüchen, der Figurenbeschreibung und den Zeichnungen zu entnehmen. Es zeigen:
- Fig. 1: eine perspektivische Ansicht einer Lenkwelle, die in einem Kraftfahrzeug eingesetzt wird, mit einem Außenrohr und einer im Außenrohr aufgenommenen, teleskopartig in Längsrichtung verschiebbaren Innenwelle, die in Umfangsrichtung formschlüssig mit dem Außenrohr gekoppelt ist,
- Fig. 2: einen Schnitt durch das Außenrohr,
- Fig. 3: einen weiteren Schnitt durch das Außenrohr in vergrößerter Darstellung.

In den Figuren sind gleiche Bauteile mit gleichen Bezugszeichen versehen.

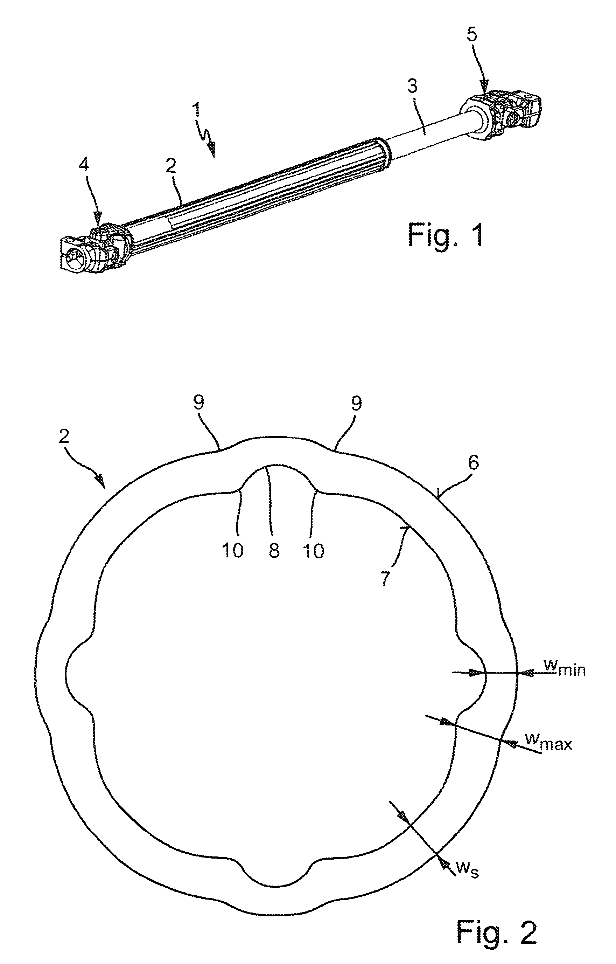

In Fig. 1 ist eine Lenkwelle 1 dargestellt, welche in einem Kraftfahrzeug eingebaut wird, bestehend aus einem Außenrohr 2 und einer im Außenrohr 2 verschieblich aufgenommenen Innenwelle 3. Das Außenrohr 2 und die Innenwelle 3 sind an gegenüberliegenden axialen Stirnseiten jeweils mit einem angeschweißten Gelenk 4 bzw. 5 versehen. Die Innenwelle 3 ist axial teleskopartig im Außenrohr 2 verschiebbar gehalten, jedoch in Umfangsrichtung mittels Formschlusselementen drehfest mit dem Außenrohr 2 gekoppelt, so dass nur eine axiale translatorische Relatiwerschiebung zwischen Außenrohr 2 und Innenwelle 3 möglich ist, jedoch keine Relativdrehbewegung. Die Formschlusselemente sind als Kugellaufbahnen bzw. Erhebungen an der Innenseite des Außenrohres bzw. der äußeren Mantelfläche der Innenwelle ausgebildet, die korrespondierend zueinander ausgeführt sind. In den Kugellaufbahnen sind Kugeln geführt, wodurch eine leichtgängige Relatiwerschiebebewegung zwischen Außenrohr und Innenwelle ermöglicht ist. Die Kugellaufbahnen bzw. Erhebungen erstrecken sich in Längsrichtung und ermöglichen dadurch die axiale Relativverschiebebewegung zwischen Außenrohr und Innenwelle.

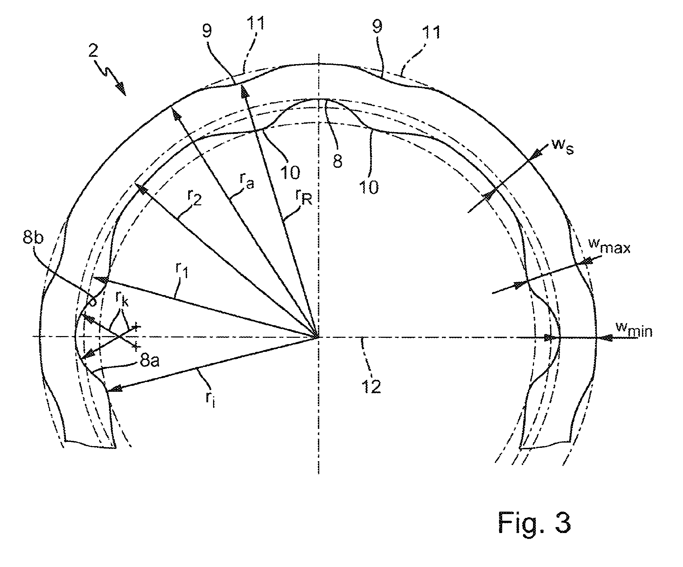

Wie der Schnittdarstellung des Au ßenrohrs 2 gemäß Fig. 2 und Fig. 3 zu entnehmen, sind an der Innenseite 7 des Außenrohres 2 im 90°-Winkel über den Umfang verteilt insgesamt vier Kugellaufbahnen 8 vorgesehen, die Formschlusselemente darstellen und mit entsprechenden Erhebungen auf der Außenseite der Innenwelle korrespondieren. Im Bereich einer Kugellaufbahn 8 besitzt das Außenrohr 2 eine minimale Wandstärke wₘᵢₙ. Unmittelbar benachbart zu den Kugellaufbahnen 8 weist die Wandstärke einen Maximalwert wₘₐₓ auf, und zwar an Innenwandreduktionsabschnitten 10, die sich in Umfangsrichtung zu beiden Seiten unmittelbar an jede Kugellaufbahn 8 anschließen.

Mit jedem Innenwandkompensationsabschnitt 10 auf der Innenseite 7 des Außenrohres 2 korrespondiert ein Außenwandreduktionsabschnitt 9 auf der Außenseite 6. Der Außenwandreduktionsabschnitt 9 weist gegenüber einer Einhüllenden 11, die um den Außenmantel 6 gelegt ist (Fig. 3), einen geringfügig reduzierten Radius r_{R} auf, wohingegen die Einhüllende 11 den maximalen Außenradius rₐ besitzt. Der Innenwandkompensationsabschnitt 10 besitzt den minimalen Innenradius rᵢ; an dieser Stelle weist die Wandstärke des Außenrohrs 2 den Maximalwert wₘₐₓ auf. Im Bereich der minimalen Wandstärke wₘᵢₙ, die das Außenrohr in der Kugellaufbahn 8 besitzt, weist das Außenrohr einen Radius r₂ auf, im zwischenliegenden Bereich zwischen zwei Kugellaufbahnen 8 besitzt die Wandstärke den Standardinnenradius r₁. In diesem zwischenliegenden Bereich zwischen zwei Kugellaufbahnen 8 besitzt die Wandstärke den Standardwert wₛ.

Die Außenwandreduktionsabschnitte 9 mit den dazu korrespondierenden Innenwandkompensationsabschnitten 10 bewirken eine Vergleichmäßigung der Wandstärke. Gegenüber der Standardwandstärke wₛ wird die größte Wandstärke wₘₐₓ im Bereich von Außenwandreduktionsabschnitt 9 bzw. Innenwandkompensationsabschnitt 10 erreicht, die geringste Wandstärke wₘᵢₙ im Bereich der Kugellaufbahnen 8. Der Übergang zwischen der Standardwandstärke wₛ zunächst zur maximalen Wandstärke wₘₐₓ und weiter zur minimalen Wandstärke wₘᵢₙ erfolgt in Umfangsrichtung sowohl auf der Außenseite des Außenrohrs als auch auf der Innenseite zumindest bis zur ersten Ableitung, vorzugsweise aber bis zur zweiten Ableitung stetig, wodurch Spannungsspitzen im Material des Außenrohrs vermieden werden.

Die Außenwandreduktionsabschnitte 9 besitzen einen Radius r_{R}, der nur geringfügig kleiner ist als der Außenradius rₐ, wobei die Abweichung vorzugsweise nicht mehr als 5 % beträgt. Dadurch fällt der Außenmantel 6 weitgehend mit der Einhüllenden 11 zusammen, der Außenmantel besitzt somit annähernd Kreisform.

Wie Fig. 3 weiter zu entnehmen, sind die Kugellaufbahnen 8 teilkreisförmig ausgeführt und setzen sich jeweils aus zwei Segmenten 8a und 8b zusammen, wobei jedes Segment für sich genommen teilkreisförmig ausgeführt ist und den Radius rₖ besitzt. Die beiden Segmente 8a, 8b weisen den gleichen Radius rₖ auf, wobei der Radiusmittelpunkt jedes Segments bezogen auf eine Mittelhalbierende 12 durch den tiefsten Punkt der Kugellaufbahn 8 einen Querversatz aufweist. Die Radiusmittelpunkte liegen auf gegenüberliegenden Seiten der Mittelhalbierenden 12, so dass sich die Radiusvektoren rₖ schneiden. Dadurch schneiden sich auch die teilkreisförmigen Sektoren im tiefsten Punkt der Kugellaufbahn, der zugleich von der Mittelhalbierenden 12 geschnitten wird. Der tiefste Punkt der Kugellaufbahn 8 weist den Radius r₂ auf.

Auf Grund dieser Geometrie der Kugellaufbahn 8 besitzt eine in der Kugellaufbahn geführte Kugel in Umfangsrichtung des Kugellaufbahnquerschnitts gesehen jeweils einen Kontaktpunkt im Bereich jedes Segmentes 8a und 8b. Unter Last passt sich die Kugeloberfläche linienförmig an den Radius jedes Segmentes 8a bzw. 8b an. Allerdings bleibt auch unter Last der tiefste Punkt der Kugellaufbahn 8 im Bereich des Schnittpunktes der beiden Segmente bzw. der Winkelhalbierenden mit den Segmenten kontaktfrei; an diesem Punkt besitzt die Kugeloberfläche keinen Kontakt zur Kugellaufbahn, wodurch das Abrollen der Kugeln in den Kugellaufbahnen verbessert wird.

### Bezugszeichenliste

- 1: Lenkwelle
- 2: Außenrohr
- 3: Innenwelle
- 4: Gelenk
- 5: Gelenk
- 6: Außenmantel
- 7: Innenseite
- 8: Kugellaufbahn
- 8a, 8b: Segment
- 9: Außenwandreduktionsabschnitt
- 10: Innenwandkompensationsabschnitt
- 11: Einhüllende
- 12: Mittelhalbierende

## Patentansprüche

1. Außenrohr einer Lenhwelle in einem Kraftfahrzeug, mit einer in dem Außenrohr (2) zu führenden Innenwelle (3), wobei die Innenwelle (3) und das Außenrohr (2) zueinander teleskopartig verschiebbar und in Drehrichtung durch an der Innenseite (7) des Außenrohrs (2) und an der Außenseite der Innenwelle (3) vier radial ineinander greifende Kugellaufbahnen (8) bzw. Erhebungen formschlüssig koppelbar sind, wobei
- das Außenrohr (2) eine sich in Umfangrichtung ändernde Wandstärke aufweist,
- das Außenrohr (2) eine den Außenmantel (6) begrenzende, kreisförmige Einhüllende (11) aufweist,
- am Außenmantel (6) radial zurückgesetzte Außenwandreduktionsabschnitte (9) mit reduziertem Außenradius vorgesehen sind, die sich in Umfangsrichtung an teilkreisförmige Kugellaufbahnen (8) anschließen, welche an der Innenseite (7) des Außenrohrs (2) vorgesehen sind,
- an der Innenseite (7) des Au ßenrohrs (2) korrespondierend zur den radial zurückgesetzten Außenwandreduktionsabschnitten (9), die sich auf der Außenseite befinden, ebenfalls radial zurückgesetzte Innenwandkompensationsabschnitte (10) ausgebildet sind,
- die innenwandkompensationsabschnitte (10) auf einem Kreis mit dem Radius rᵢ liegen,
- die Bereiche außerhalb der Kugellaufbahnen (8) und Innenwandkompensationsabschnitte (10) auf einem Kreis mit dem Radius r₁ liegen,
- der jeweils tiefste Punkt der Kugellaufbahnen (8) auf einem Kreis mit dem Radius r₂ liegt,
- die Außenwandreduktionsabschnitte (9) auf einem Kreis mit dem Radius r_{R} liegen,
- die kreisförmige Einhüllende des Außenmantels (6) den Radius rₐ hat, und
- wobei die maximale Wandstärke des Außenrohres Wₘₐₓ mit (r_{R} - rᵢ) bestimmt wird,
- wobei die standard-Wandstärke des Außenrohres wₛ des Außenrohres im Bereich zwischen zwei Innenwand kompensations abschnitten (10) der wandstärken des Außenrohres zueinander mit (rₐ - r₁) bestimmt wird,
- wobei die minimale Wandstärke des Außenrohres mit (rₐ - r₂) bestimmt wird und bezüglich Wₘᵢₙ < wₛ < wₘₐₓ gitt.

2. Außenrohr nach Anspruch 1,
**dadurch gekennzeichnet,**
**dass** die Änderung des Innenradius im Übergang zu den Innenwandkompensationsabschnitten (10) zumindest bis zur 1. Ableitung stetig ist.

3. Außenrohr nach Anspruch 1 oder 2,
**dadurch gekennzeichnet,**
**dass** die Wandstärke im Bereich der Innenwandkompensationsabschnitte (10) größer ist als die Standardwandstärke des Außenrohrs (2) außerhalb der Innenwandkompensationsabschnitte (10).

4. Außenrohr nach einem der Ansprüche 1 bis 3,
**dadurch gekennzeichnet,**
**dass** die Wandstärke im Bereich der an der Innenseite (7) ausgebildeten Kugellaufbahnen (8) kleiner ist als die Standardwandstärke (wₛ) des Außenrohrs (2).

5. Außenrohr nach einem der Ansprüche 1 bis 4,
**dadurch gekennzeichnet,**
**dass** die Änderung des Außenradius im Übergang zu den Außenwandreduktionsabschnitten (9) zumindest bis zur 1. Ableitung stetig ist.

6. Außenrohr nach einem der Ansprüche 1 bis 5,
**dadurch gekennzeichnet,**
**dass** der Außenradius im Bereich der radial zurückgesetzten Außenwandreduktionsabschnitte (9) nicht mehr als 10%, insbesondere nicht mehr als 5% gegenüber der Einhüllenden (11) reduziert ist.

7. Außenrohr nach einem der Ansprüche 1 bis 6,
**dadurch gekennzeichnet,**
**dass** der Innenradius im Bereich der radial zurückgesetzten Innenwandkompensationsabschnitte (10) nicht mehr als 20% , insbesondere nicht mehr als 10% gegenüber dem Bereich zwischen zwei an der Innenseite (7) ausgebildeten Kugellaufbahnen (8) reduziert ist.

8. Außenrohr nach einem der Ansprüche 1 bis 7,
**dadurch gekennzeichnet,**
**dass** die Wandstärke des Au ßenrohrs (2) zwischen den Außenwandreduktionsabschnitten (9) und den Bereichen außerhalb der Außenwandreduktionsabschnitte (9) um maximal 25% differiert.

9. Außenrohr nach einem der Ansprüche 1 bis 8,
**dadurch gekennzeichnet,**
**dass** sich der Querschnitt der Kugellaufbahnen (8) aus Segmenten (8a, 8b) mit gleichem Radius (rₖ) zusammensetzt, wobei der Radiusmittelpunkt jedes Segments (8a, 8b) bezogen auf eine Mittelhalbierende (12) durch die Kugellaufbahn (8) einen Querversatz aufweist.

10. Außenrohr nach Anspruch 9,
**dadurch gekennzeichnet,**
**dass** die Radiusmittelpunkte der beiden Segmente (8a, 8b) auf gegenüberliegenden Seiten der Mittelhalbierenden (12) liegen.

11. Lenksäuleneinrichtung in einem Kraftfahrzeug mit einem Außenrohr (2) nach einem der Ansprüche 1 bis 10.

## Claims

1. An outer tube of a steering shaft in a motor vehicle, comprising an inner shaft (3) to be guided in the outer tube (2), the inner shaft (3) and the outer tube (2) being telescopically displaceable in relation to each other and, in the direction of rotation, being positively couplable by four radially mutually engaging ball grooves (8) and elevations on the inside (7) of the outer tube (2) and on the outside of the inner shaft (3), wherein
- the wall thickness of the outer tube (2) varies in the circumferential direction,
- the outer tube (2) has a circular envelope (11) delimiting the outer casing (6),
- radially recessed outside wall reduction sections (9) having a reduced outside radius are provided on the outer casing (6) which, in the circumferential direction, adjoin circular segment-shaped ball grooves (8) that are provided on the inside (7) of the outer tube (2),
- likewise radially recessed inside wall compensation sections (10) are configured on the inside (7) of the outer tube (2), corresponding to the radially recessed outside wall reduction sections (9), which are located on the outside,
- the inside wall compensation sections (10) are located on a circle having the radius rᵢ,
- the regions outside of the ball grooves (8) and inside wall compensation sections (10) are located on a circle having the radius r₁,
- the respective lowest point of the ball grooves (8) is located on a circle having the radius r₂,
- the outside wall reduction sections (9) are located on a circle having the radius r_{R},
- the circular envelope of the outer casing (6) has the radius rₐ, and
- wherein the maximum wall thickness of the outer tube wₘₐₓ is determined by (r_{R} - rᵢ),
- wherein the standard wall thickness of the outer tube wₛ of the outer tube in the region between two inside wall compensation sections (10) is determined by (rₐ - r₁),
- wherein the minimum wall thickness of the outer tube wₘᵢₙ is determined by (rₐ - r₂), and in relation to the wall thicknesses of the outer tube with respect to one another
wₘᵢₙ < wₛ < wₘₐₓ applies.

2. The outer tube according to claim 1, **characterized in that** the change in the inside radius in the transition to the inside wall compensation sections (10) is constant at least to the first derivative.

3. The outer tube according to claim 1 or 2, **characterized in that** the wall thickness in the region of the inside wall compensation sections (10) is larger than the standard wall thickness of the outer tube (2) outside of the inside wall compensation sections (10).

4. An outer tube according to any one of claims 1 to 3, **characterized in that** the wall thickness in the region of the ball grooves (8) configured on the inside (7) is smaller than the standard wall thickness (wₛ) of the outer tube (2).

5. An outer tube according to any one of claims 1 to 4, **characterized in that** the change of the outside radius in the transition to the outside wall reduction sections (9) is constant at least to the first derivative.

6. An outer tube according to any one of claims 1 to 5, **characterized in that** the outside radius in the region of the radially recessed outside wall reduction sections (9) is reduced by no more than 10%, and more particularly by no more than 5%, in relation to the envelope (11).

7. An outer tube according to any one of claims 1 to 6, **characterized in that** the inside radius in the region of the radially recessed inside wall compensation sections (10) is reduced by no more than 20%, and more particularly by no more than 10%, in relation to the region between two ball grooves (8) configured on the inside (7).

8. An outer tube according to any one of claims 1 to 7, **characterized in that** the wall thickness of the outer tube (2) between the outside wall reduction sections (9) and the regions outside of the outside wall reduction sections (9) differs by no more than 25%.

9. An outer tube according to any one of claims 1 to 8, **characterized in that** the cross-section of the ball grooves (8) comprises segments (8a, 8b) having the same radius (rₖ), wherein the radius center point of each segment (8a, 8b), in relation to a midline (12) through the ball groove (8), is transversely offset.

10. The outer tube according to claim 9, **characterized in that** the radius center points of the two segments (8a, 8b) are located on opposing sides of the midline (12).

11. A steering column device in a motor vehicle, comprising an outer tube (2) according to any one of claims 1 to 10.

## Revendications

1. Tube extérieur d'un arbre de direction dans un véhicule automobile, comprenant un arbre intérieur (3) devant être guidé dans le tube extérieur (2), l'arbre intérieur (3) et le tube extérieur (2) pouvant être déplacés de manière télescopique l'un par rapport à l'autre et pouvant être accouplés l'un à l'autre par engagement par correspondance géométrique dans la direction de rotation par quatre pistes de roulement à billes (8) venant en prise radialement les unes dans les autres ou par des rehaussements au niveau du côté intérieur (7) du tube extérieur (2) et au niveau du côté extérieur de l'arbre intérieur (3),
- le tube extérieur (2) présentant une épaisseur de paroi variant dans la direction périphérique,
- le tube extérieur (2) présentant une extrémité d'enveloppe (11) de forme circulaire limitant l'enveloppe extérieure (6),
- des portions de réduction de la paroi extérieure (9) radialement en retrait au niveau de l'enveloppe extérieure (6) et de rayon extérieur réduit étant prévues, lesquelles se raccordent dans la direction périphérique à des pistes de roulement à billes (8) de forme partiellement circulaire, qui sont prévues sur le côté intérieur (7) du tube extérieur (2),
- des portions de compensation de la paroi intérieure (10), également radialement en retrait, étant réalisées sur le côté intérieur (7) du tube extérieur (2) de manière correspondant aux portions de réduction de la paroi extérieure (9) radialement en retrait qui se trouvent sur le côté extérieur,
- les portions de compensation de la paroi intérieure (10) étant situées sur un cercle de rayon rᵢ,
- les régions en dehors des pistes de roulement à billes (8) et les portions de compensation de la paroi intérieure (10) se trouvant sur un cercle de rayon rᵢ,
- le point le plus profond des pistes de roulement à billes (8) se trouvant à chaque fois sur un cercle de rayon r₂,
- les portions de réduction de la paroi extérieure (9) se trouvant sur un cercle de rayon r_{R},
- l'extrémité d'enveloppe de forme circulaire de l'enveloppe extérieure (6) présentant un rayon rₐ, et
- l'épaisseur de paroi maximale wₘₐₓ du tube extérieur étant définie par (r_{R} - rᵢ),
- l'épaisseur de paroi standard wₛ du tube extérieur dans la région entre deux portions de compensation de la paroi intérieure (10) étant définie par (rₐ - r₁),
- l'épaisseur de paroi minimale wₘᵢₙ du tube extérieur étant définie par (rₐ - r₂), et par rapport aux épaisseurs de paroi du tube extérieur l'une par rapport à l'autre, on a wₘᵢₙ < wₛ < wₘₐₓ.

2. Tube extérieur selon la revendication 1,
**caractérisé en ce que**
la variation du rayon interne dans la transition aux portions de compensation de la paroi intérieure (10) est constante au moins jusqu'à une 1ère dérivée.

3. Tube extérieur selon la revendication 1 ou 2,
**caractérisé en ce que**
l'épaisseur de paroi dans la région des portions de compensation de la paroi intérieure (10) est supérieure à l'épaisseur de paroi standard du tube extérieur (2) en dehors des portions de compensation de la paroi intérieure (10).

4. Tube extérieur selon l'une quelconque des revendications 1 à 3,
**caractérisé en ce que**
l'épaisseur de paroi dans la région des pistes de roulement à billes (8) réalisées sur le côté intérieur (7) est inférieure à l'épaisseur de paroi standard (wₛ) du tube extérieur (2).

5. Tube extérieur selon l'une quelconque des revendications 1 à 4,
**caractérisé en ce que**
la variation du rayon extérieur dans la transition aux portions de réduction de la paroi extérieure (9) est constante au moins jusqu'à la première dérivée.

6. Tube extérieur selon l'une quelconque des revendications 1 à 5,
**caractérisé en ce que**
le rayon extérieur dans la région des portions de réduction de la paroi extérieure (9) radialement en retrait n'est pas réduit de plus de 10 %, notamment n'est pas réduit de plus de 5 % par rapport aux extrémités d'enveloppe (11).

7. Tube extérieur selon l'une quelconque des revendications 1 à 6,
**caractérisé en ce que**
le rayon intérieur dans la région des portions de compensation de la paroi intérieure (10) radialement en retrait n'est pas réduit de plus de 20 %, notamment n'est pas réduit de plus de 10 % par rapport à la région entre deux pistes de roulement à billes (8) réalisées sur le côté intérieur (7).

8. Tube extérieur selon l'une quelconque des revendications 1 à 7,
**caractérisé en ce que**
l'épaisseur de paroi du tube extérieur (2) entre les portions de réduction de la paroi extérieure (9) et les régions en dehors des portions de réduction de la paroi extérieure (9) diffère au maximum de 25 %.

9. Tube extérieur selon l'une quelconque des revendications 1 à 8,
**caractérisé en ce que**
la section transversale des pistes de roulement à billes (8) se compose de segments (8a, 8b) de même rayon (rₖ), le centre du rayon de chaque segment (8a, 8b) présentant, par rapport à une bissectrice (12) passant par la piste de roulement à billes (8), un décalage transversal.

10. Tube extérieur selon la revendication 9,
**caractérisé en ce que**
les centres des rayons des deux segments (8a, 8b) se situent sur des côtés opposés de la bissectrice (12).

11. Dispositif de colonne de direction dans un véhicule automobile, comprenant un tube extérieur (2) selon l'une quelconque des revendications 1 à 10.
